# EUROPEAN PATENT SPECIFICATION

(11) **EP 4 087 311 B1**
(45) Date of publication and mention of the grant of the patent: **02.07.2025**
(21) Application number: 21172109.7
(22) Date of filing: 04.05.2021
(51) Int. Cl.: H04L 45/64, H04L 47/78, H04L 65/611, H04L 65/752, H04N 21/233, H04N 21/2343, H04N 21/2662, H04N 21/61, H04N 21/647

(54) **LOAD DATA TRANSFORMER AND METHOD**
LASTDATENTRANSFORMATOR UND VERFAHREN
TRANSFORMATEUR DE DONNÉES DE CHARGE ET PROCÉDÉ

(43) Date of publication of application: 09.11.2022
(73) Proprietor: Rohde & Schwarz GmbH & Co. KG, 81671 München (DE)
(72) Inventor: JANNER, Thomas, 82194 Gröbenzell (DE); OESTREICHER, Lars, 80538 München (DE); REITMEIER, Manfred, 84036 Landshut (DE); SINNHUBER, Johannes, 86916 Kaufering (DE); TAGA, Aziz, 81241 München (DE); UHLMANN, Maurice, 84427 St. Wolfgang (DE)
(74) Representative: Novagraaf Group

(56) References cited:
- US-A1- 2004 198 371
- US-A1- 2005 053 062
- US-A1- 2013 150 007

## Description

### TECHNICAL FIELD

The disclosure relates to a broadcast network and a method for operating a broadcast network.

### BACKGROUND

Although applicable to any combination of different networks, the present disclosure will mainly be described in conjunction with broadcast networks and cellular networks.

Today, the number of communication devices that are served in cellular networks increases steadily. One source of new communication devices is the increasing demand of users for mobile voice and data communication. Other sources of this increase are new applications, like Internet-of-Things or loT devices.

Document US 2004 / 198 371 A1 discloses how to vary the quality of a broadcast stream responsive to changes in the utilization of forward link air interface resources. Document US 2005 / 053 062 A1 discloses how to enable the transmission of content for the same packet delivery and/or forwarding service via radio access networks with different available capacities. Document US 2013 / 150 007 A1 discloses a method for data transmission in wireless networks with increased resource utilization.

With an increasing number of communication devices, cellular networks become more and more complex. Consequently, the technical and financial efforts required for building and managing such networks continually increase.

There is a need for reducing these efforts.

### SUMMARY

The above stated problem is solved by the features of the independent claims. It is understood, that independent claims of a claim category may be formed in analogy to the dependent claims of another claim category.

The present disclosure acknowledges the fact that serving more devices in cellular networks increases the complexity of the networks, since smaller cells need to be provided, or more capable transmitters need to be provided, to serve the increased number of devices. With increasing capabilities, the complexity and therefore also the costs for the transmitters raise. The same may apply to the power consumption of such transmitters. Operating the cellular network therefore becomes more demanding technically and economically.

When planning a cellular network, the operator of the network may estimate the average load on the cellular network and dimension the cellular network accordingly. However, when a cellular network is dimensioned for an average load, the cellular network may experience congestion and overload situations.

Such situations may for example arise when an important event, like a live sports event is viewed by many users on their mobile devices. The data stream comprising e.g., video and audio data for such a sports event, needs to be provided to all transceivers of the cellular network that currently serve at least one user that wants to view the event. In addition, users today expect a flawless experience, where the video and audio data is distributed with low latencies and high quality, an expectation that is difficult to meet, especially under high-load conditions.

This is especially true, since mobile cellular networks have been based, and still rely on a strong unicast communication model to provide various services to their end users. However, nowadays consumers find their comfort while watching a huge amount of premium content, of which a high percentage is live media services.

On the other hand, broadcast networks are well established for broadcast and multicast data transmission like TV and radio transmissions via digital video broadcast like DVB-T, for terrestrial transmission, or DVB-S, for satellite transmission. Since broadcast networks are usually designed to provide broadcast or multicast one-way data transmission, these networks may operate efficiently with any number of receiving devices. Further, since the area of coverage of a transmitter of a broadcast network is larger than the area of coverage of a transmitter of a cellular network, which is especially the case for satellite-based broadcast networks, the network infrastructure of broadcast networks is less complex to build and maintain than the infrastructure of cellular networks.

The present disclosure acknowledges that users will demand more and more services from cellular networks on their mobile devices that either require overprovisioning or may lead to congestion in the cellular networks. The present disclosure, therefore, provides means for effectively using the infrastructure provided by broadcast networks to provide data to devices that usually operate in cellular networks.

A cellular network in the context of the present disclosure may be a communication network providing bi-directional wireless communication for electronic devices, like user equipment such as mobile phones, also called UE, IoT devices and the like. Usually, a cellular network is a distributed network comprising "cells", wherein each cell is served by at least one fixed-location transceiver. A site hosting the fixed-location transceivers may also be called a base station. A cellular network usually allows transmission of voice, video and audio data and other types of content. Neighboring cells usually use different sets of frequencies to avoid interference between the single cells. Mobile devices in the cellular network may perform a hand-over when moving from one cell to another. All cells together form the cellular network and provide radio coverage over a wide geographical area, wherein small local cells, e.g. indoor cells, are also possible. A cellular network in the context of the present disclosure may also comprise a satellite-based cellular network. Such a satellite-based cellular network may offer bidirectional communication to receiving devices in small cells with low flying satellites. Usually, such a satellite-based cellular network will comprise a large number of satellites. These types of satellite-based cellular network may be designed for unicast data communication.

The single transceivers of a cellular network are usually communicatively coupled to a common network, also called core network or backbone network. Data may be served to the transceivers from the common network and may be provided from the transceivers into the common network. It is understood, that the common network not necessarily is a single network, but may also comprise different network segments that may be communicatively coupled to each other via other networks, like e.g. the internet or dedicated backbone networks.

In cellular networks traditionally, a point-to-point communication is performed, like e.g. when a telephone call is conducted between to devices. In modern cellular networks like e.g., 5G networks, multicast transmissions are also possible. Due to the limited size of the single cells in a cellular network, the data to be transmitted in a multicast mode hast to be transmitted to every single transceiver via the common network.

In the context of the present disclosure, the operator of a cellular network may also be called the MNO or mobile network operator.

A broadcast network in the context of the present disclosure may be a one-way communication network that usually provides at least one of audio communication and/or video communication in a one-way or unidirectional fashion to electronic devices, like radio receivers or TV sets. It is understood, that a broadcast network in the context of the present invention may be terrestrial broadcast network, a satellite broadcast network or a combination of both.

It is understood, that in the context of the present disclosure, a broadcast network may also provide communication to devices that are usually served by cellular networks. Further, in the context of the present disclosure a broadcast network is not limited to broadcast transmissions, but may also provide multicast transmissions. A broadcast transmission in this context is to be understood as a transmission to all receivers within reach of a single transmitter. A multicast transmission in this context is to be understood as a transmission to a limited group of receivers within reach of a single transmitter, instead of all receivers.

A broadcast network may be formed by a group comprising at least one of a plurality of radio stations, a plurality television stations, or combined radio and television stations, or satellite stations. The term radio station refers to equipment for transmitting audio content wirelessly e.g., over the air. The term television station refers to equipment for transmitting audio and video content wirelessly e.g., over the air. The term satellite station refers generally to a satellite that is communicatively linked to a ground station and may be used as a radio access network or transmitter in the broadcast network.

It is understood, that for a broadcast network a common network, also called core network, may be provided that couples to the single transmitters, as explained above for cellular networks. If one or more satellites are part of the broadcast network, the respective ground stations may be communicatively coupled to the core network of the broadcast network. Since the area of coverage of a transmitter of a broadcast network is larger than the area of coverage of a transmitter of a cellular network, the common network needs to connect to a smaller number of transmitters and therefore usually is of lower complexity than the common network of a cellular network.

As explained above, the geographical area covered by each of the transmitters of a broadcast network is larger than the geographical area covered by each of the transmitters of a cellular network. In embodiments, the geographical area covered by each of the transmitters of a broadcast network may comprise an area larger than the geographical area covered by at least two transmitters of a cellular network, i.e. larger than two cells of the cellular network.

In examples, the area covered by a single terrestrial transmitter of a broadcast network may comprise a radius of about 1 km up to more than 100km. The area covered by a single transmitter of a cellular network may comprise a radius of up to 35 km. At the same time, the transmitting power of a transmitter in a broadcast network may range up to 20 kW. In cellular networks, the transmitting power of the respective transmitters may range up to 500 Watts. Further, the transmitters in broadcast networks will usually use other frequencies than the transmitters in cellular networks. The transmitters in the broadcast networks may for example use frequencies in the UHF band, for example between 470 MHz and 698 Mhz.

For satellites as transmitters, the size of the area of coverage may be size of the full earth globe, and the transmission power may be between 20W and 300W (depending on the bands and the usage).

Exemplary standards used in broadcast networks may comprise DVB-based protocols, especially DVB-T and DVB-S based protocols, ATSC-based protocols, and 5G for broadcast networks or any future broadcast network standard. In cellular networks, the respective standards like UMTS, LTE and 5G or any future cellular network protocol may be used.

In the context of the present disclosure, the operator of a broadcast network may also be called the BNO or broadcast network operator.

The cellular networks and the broadcast networks mentioned in the present disclosure may comprise so called radio access networks or RANs and core networks or CNs. A RAN or Radio Access Network provides a radio access technology, and usually resides between a user device and the respective CN. A RAN in the context of the present disclosure may comprise the base station with respective antennas and a connection to the CN, and/or a satellite with connection to the CN via a respective ground station.

The radio access networks, also called RANs, and core networks, also called CNs, mentioned in the present disclosure are not limited to a specific type of network. Nevertheless, in the present disclosure a RAN with regard to cellular networks may comprise at least one of a GRAN, also GSM radio access network, a GERAN, which is essentially the same as GRAN but specifying the inclusion of EDGE packet radio services, a UTRAN, also called UMTS radio access network, and an E-UTRAN, the Long Term Evolution (LTE) high speed and low latency radio access network, or a RAN according to any upcoming RAN standard, or satellite-based RAN.

Accordingly, in the present disclosure a RAN with regard to a broadcast network may comprise any technology that allows transmitting data in a broadcast or multicast manner to electronic devices. Such a RAN may for example comprise a DVB-T transmitter with respective antennas and a connection to the respective core network, or a satellite as DVB-S transmitter with respective antennas and a connection to the respective core network via the ground station of the satellite.

Possible RANs comprise, but are not limited to, multi-frequency network or MFN RANs, single frequency network or SFN RANs, and SC-PTM RANs, also called Single-Cell - Point-to-Multipoint RANs. The RANs in the context of the present disclosure may for example comprise so called LPLT transmitters, also called low-power low-tower transmitters, HPHT transmitters, also called high-power high-tower transmitters, MPMT transmitters, which are a hybrid transmitter combining elements of LPLT and HPHT transmitters. MPMT stands for Medium Power Medium Tower. MPMT transmitters may have an output power that comes in between LPLT and HPHT, e.g. 350W - 6KW, which automatically results in a coverage capability between those of LPLT and HPHT, e.g. 5KM - 30KM, depending on the specific deployment scenarios and other parameters. Further, a RAN in the context of the present disclosure may comprise at least one transmitter with a fixed geographical location. As explained above, a transmitter for a broadcast network may comprise a transmitting power of up to 20kW or more, and cover an area of more than 100km radius.

The term core network in the context of the present disclosure refers to a network that couples to the RANs of the respective network. Core networks are sometimes also referred to as backbone networks. It is understood, that any networking technology, like cable-based ethernet, optical fiber-based ethernet, or other network technologies may be used to transmit data in the core network to and from the RANs. The core network may further comprise connections to other networks, like the networks of content providers or the like.

It is understood, that radio access networks and core networks in the context of the present disclosure may comprise further elements, like network connections, network switches, network hubs, servers, and the like.

The present disclosure acknowledges, as indicated above, that data may be offloaded from cellular networks to a broadcast network. To further support offloading of load data, even if the available resources in the broadcast network do not match the resources required for transmission of the load data, the present disclosure provides the load data transformer.

The load data transformer comprises a data interface that couples the load data transformer to at least one load data source network. Such a load data source network may be the core network of a broadcast network. The core network usually transports load data to radio access networks of the respective broadcast network for emission in a load data signal to the receiving devices. The load data source network may for example also be the content network of a content provider.

The data interface also couples the load data transformer to at least one load data receiving network. It is understood, that the load data source network and the load data receiving network may be the same network, like for example a core network of a broadcast network. However, the load data source network and the load data receiving network may also be different networks, like a content network as load data source network, and a core network as load data receiving network. Further, the load data receiving network may also be another network that is communicatively coupled to the core network of the broadcast network.

The load data transformer of the present disclosure may be provided in the broadcast network. In such an embodiment the data interface may be an internal interface in the broadcast network. The load data transformer may for example be provided as dedicated element, like a server in the broadcast network. Such a server may be communicatively coupled to the core network of the broadcast network via a hardware-based data interface, like an Ethernet interface. The load data transformer may also be provided as an additional function in a server that is already present in the core network. Such a load data transformer may for example be provided as software application in the server or a function of a firmware or operating software of the server. Such a load data transformer may comprise the data interface as a software-based interface, like an API, or as a combination of a software-based and hardware-based interface.

The core network is usually communicatively coupled to at least one radio access network. It is understood, that the broadcast network may comprise any number of radio access networks that may all be coupled, directly or indirectly, to the core network. The single radio access networks may be distributed over a specific geographical area like e.g., a country or simply the area of operation of a network operator that operates the broadcast network. The core network distributes load data to the radio access networks that is to be distributed or emitted via the radio access networks. It is understood, that the core network may comprise routing mechanisms that allow transmitting specific pieces of load data only to those radio access networks that should emit the load data in respective load data signals. It is understood, that the load data refers to the content or content data that is to be transmitted to receiving devices. Such load data may comprise video data, audio data, software update data, or any other type of data that is to be transmitted.

It is understood, that the core network may comprise a respective interface or respective interfaces that allow operators of cellular networks or other content providers to provide the load data to the core network. Such interfaces may comprise hardware-based network interfaces, API-based or software-based interfaces, or a combination of both. The core network may for example be coupled via a hardware interface to a network of a content provider or cellular network operator directly or indirectly. The load data may be provided to the core network via an upload functionality that is provided by the core network. It is understood, that such an upload functionality may comprise security measures, like e.g. authentication and encryption. In embodiments, the core network may for example comprise one or more FTP or HTTP(S) servers, that allow a content provider to upload the load data. In case of live streaming data, the core network may also provide a streaming endpoint, that accepts the load data in the form of a stream for further processing in the core network. In other embodiments, the broadcast network e.g., a network controller or other elements of the core network, like a data loader, may be configured to retrieve the load data from a location that may be indicated by the provider of the load data.

If, as indicated above, the load data transformer is provided as part of the broadcast network, the load data is directly available for the load data transformer. This is especially true, if the load data transformer is provided in an element of the core network.

The load data transformer may however also be provided outside of the broadcast network. This allows providing the function of the load data transformer as an external service to operators of broadcast networks.

In such embodiments, the load data transformer may be provided as a dedicated service. The expression dedicated service includes providing the service from a dedicated server, a virtualized server, as a cloud-based service, or any other form of providing the respective functionality. The data interface of such a load data transformer may comprise a hardware-based interface, like an Ethernet interface, a software-based interface comprising respective API-functions, upload and download functions, and control functions, or a combination of both.

If the load data transformer is not provided in the broadcast network, the load data in the load data source network is not directly available to the load data transformer. The data interface may therefore be capable of passively receiving and/or actively downloading the load data from the load data source network. Instead of by a cellular network, the load data may also be provided directly by a content distribution network or other content providers

The load data transformer comprises the data transformer that is capable of transforming the load data provided by the load data source network. Transforming in this context refers to any transformation performed with the load data that makes the load data more adequate for transmission in the load data signal. The load data is transformed by the load data transformer based on a radio access network resources schedule of the broadcast network. This schedule may be provided to the load data transformer via the data interface, especially by an operator of a broadcast network that will be used for transmission of the transformed load data. In cases, this operator may also operate the load data source network in the form of a core network.

After transformation, the transformed load data is provided to the load data receiving network. As indicated above, the load data receiving network may be the same network as the load data source network e.g., a core network of a broadcast network. The load data receiving network may also be a different than the load data source network. The load data source network may for example be a content network of a content provider, and the load data receiving network may be the core network of a broadcast network.

The radio access network resources schedule represents the availability of the radio access network resources for different points in time in the broadcast network. The radio access network resources schedule, therefore, allows identifying the amount that is available of each radio access network resource. The radio access network resources schedule may be stored in the load data transformer or a dedicated storage, like a database, and may comprise information about reservations or utilizations of the single radio access network resources. It is understood, that the radio access network resources schedule may apply only to those radio access network resources that are limited.

Further, the radio access network resources schedule may be provided in any adequate format. The radio access network resources schedule may for example be based on time-slots, and may indicate for a specific radio access network resource, which time slots are occupied by the respective radio access network resource. In another embodiment, the radio access network resources schedule instead of using time slots, may indicate for every radio access network resource a start time and an end time. This allows more flexibly reserving the single radio access network resources without being bound to the time slots.

The radio access network resources schedule may further store the amount that is available of every radio access network resource. This information may in embodiments be stored individually for single elements of the broadcast network. For example, different radio access networks may comprise different transmitters with different capabilities regarding e.g., bandwidth, modulation schemes, frequency ranges, and the like. If the radio access network resources schedule stores such information individually for all elements of the broadcast network, it is possible to effectively select all available radio access network resources for a transmission of load data.

The transforming of the load data by the data transformer may, therefore, be specifically performed based on the available radio access network resources as indicated in the radio access network resources schedule.

With the load data transformer according to the present disclosure, a broadcast network is enabled to dynamically receive the load data from e.g., a cellular network, and of transmitting the load data to electronic devices, that usually receive the load data via the cellular network, even if the available radio access network resources are not sufficient for transmission of the original load data.

The transformation of the load data allows accepting load data that may not be transmitted with the available radio access network resources, and transmitting the load data in the transformed version with the available radio access network resources in form of the transformed load data.

Especially for cellular networks, the load data transformer allows using broadcast networks as a kind of backup network or offloading network for high load situations. An operator of such a network, like a cellular network, may dynamically offload load data into the broadcast network as needed. It is understood, that the respective receiving devices may be informed via the respective network e.g., the cellular network, about the transmission of the load data via the broadcast network.

Further embodiments of the present disclosure are subject of the further dependent claims and of the following description, referring to the drawings.

In an embodiment, the at least one radio access network resource may comprise at least one of a geographical location for transmission of the load data, a frequency range or bandwidth for transmission of the load data, a transmission time or time slot for transmission of the load data, and a modulation scheme for modulating the load data signal.

The radio access network resources refer to those parameters of the emission of the wireless load data signal that are to be configured in the radio access networks. Usually, the radio access network resources are limited.

For example, a geographical location for transmission of the load data is limited by the location of the available radio access networks. At the same time, the frequency range or bandwidth for transmission of the load data in every radio access network is limited technical and by official regulations. The possible modulation schemes may be limited by the capabilities of the modulators in the respective radio access networks.

The radio access network resources schedule stores which of the radio access network resources are available at which points in time. Therefore, the radio access network resources schedule allows easily determining for example, which frequency ranges are available for transmission of specific load data, and therefore what the maximum data rate may be for the transmission.

In yet another embodiment, the data transformer may be configured to transform the load data by at least one of reducing the quality of video or audio data comprised in the load data, increasing the quality of video or audio data comprised in the load data, removing data from the load data, adding data to the load data, changing data in the load data, changing a bit rate of the load data if the load data comprises video and/or audio data, and changing a transmission length of the load data.

Transforming the load data may comprise upscaling or downscaling video or audio data in the load data. As explained above, the radio access network resources schedule allows identifying available radio access network resources, like for example the available frequency range and modulation schemes. This information allows determining the possible data rate for transmission of the load data.

If the provider of the load data requires a higher data rate, without the transformation of the load data, the offloading of the load data from a content provider network or a cellular network to the broadcast network would have to be rejected.

However, with the transformation it may be possible to reduce the required data rate.

If the load data for example comprises a video stream or an audio stream with a predetermined quality, the transforming may reduce the quality of the video or audio stream. The transforming may for example downscale a video stream or audio stream, or recompress the video or audio stream with higher compression ratio, but at the same resolution. The transforming may also reduce a bit rate of an audio stream or the framerate of a video stream.

However, the opposite may also be the case. If the radio access network resources schedule indicates that a higher data rate than requested by the provider of the load data is available, the transforming may increase the quality of a video or audio stream. The transforming may for example comprise an upscaling or interpolating of the video or audio stream. The transforming may also increase a bit rate of an audio stream or the framerate of a video stream.

It is understood, that such a transforming may be performed with known up-/down-scalers or interpolators or with an artificial intelligence-based transformer for reducing or increasing the quality of audio or video data in the load data.

Transforming may also comprise removing data from the load data. The load data may for example comprise multiple audio streams in different languages, or different video streams showing different camera angles for a live sports event. Transforming may for example comprise removing the least needed language streams or camera angle streams.

Transforming may also comprise adding data. As indicated above, higher data rates than request may be available for transmitting the load data. In such cases, transforming may also comprise adding data to the load data. Transforming may also comprise changing the data.

The type of radio access network resource that is not available may be the transmission time or time slot for transmission of the load data. In such cases, transforming may also comprise changing the data rate or transmission length for transmission of the load data.

For example, if it is requested to offload program data at a specific data rate via the broadcast network, the provider of the program data may have chosen a slow data rate with costs in view. The data rate may however be so slow that the available time is not enough for transmitting the program data.

Transforming may also comprise transforming the radio access network resources used for transmission of the load data. In the above case, this allows increasing the data rate for transmission of the load data. The operator of the broadcast network may e.g., offer the increased data rate to the provider of the load data for the price of the original data rate, instead of losing the assignment.

Transforming may also comprise changing the transmission length of the load data.

In a further embodiment, the load data transformer may comprise a transformation resource schedule comprising information about available transformation resources in the data transformer. The data transformer may be configured to timely schedule the transformation of the load data based on the transformation resource schedule.

The transformation resource schedule may for example be stored in the data transformer e.g., in an in-memory database. Of course, the transformation resource schedule may also be stored in a dedicated database that may be communicatively coupled to the data transformer.

The transforming capabilities in the load data transformer may be limited. Therefore, it may not be possible to process an arbitrary amount of load data at every point in time.

The transformation resource schedule may indicate for every point in time which transformation resources are available. The load data transformer may then schedule different transformation tasks according to the transformation resource schedule.

With the transformation resource schedule it is therefore possible to timely plan transformations and distribute the transformation tasks such that the number of processed transformation tasks or the utilization of the load data transformer may be maximized. This may be especially advantageous with the below-mentioned data storage. The combination of the data storage and scheduling the transformation tasks allows pre-transforming the load data and storing the transformed load data.

In another embodiment, the load data transformer may comprise a data storage, wherein the data transformer may be communicatively coupled to the data storage and may be configured to receive the load data and store at least one of the load data and the transformed load data in the data storage.

The load data transformer may receive the load data in advance to the transmission of the load data via the radio access networks. In advance in this regard refers to the load data being provided long before it is to be transmitted to receiving devices, like e.g., hours or days before, for example, when the provider of the load data requests the data offloading.

The data storage serves for pre-storing the load data for later transmission. This is especially relevant for load data that does not represent live footage and does not need to be transmitted instantly.

The load data transformer may therefore serve as a temporary storage for offloading load data from the content provider e.g., a cellular network. This allows reducing the size and/or number of storages in the load data source network or the load data receiving network.

If the load data is pre-stored in the data storage, the transformation of the load data may be performed at any time before the required delivery time. Therefore, especially in combination with the above-mentioned transformation resource schedule, maximum utilization of the available transformation resources may be achieved.

Further, if the load data is pre-stored in the load data transformer, it is also possible to emit the load data in a bulk emission to the receiving devices. This may for example be used to pre-store load data in the receiving devices. For example, an operator of a cellular network may notice an increased interest in specific content like e.g., a new season of a TV series or the currently most watched movies. Such content may pose a problem for a cellular network, because it constantly causes high network load if many users watch the same series concurrently.

With the data storage, the cellular network operator may provide a full season of a series or the most watched movies to the load data transformer and request the transmission of the load data in bulk to the receiving devices. The single receiving devices may then store the load data that is transmitted in bulk for viewing later by the users.

The bulk emission of the load data may be performed during times of the day that usually comprise only a low amount of load data emitted via the broadcast network, for example during the nights.

In addition, a bulk emission may be performed at the maximum possible speed, instead of at a streaming data rate. Therefore, the time required to perform a bulk transmission is reduced compared to streaming a video.

It is understood, that the receiving devices may comprise respective applications that may store the pre-delivered load data for later use e.g., viewing by a user.

In other embodiments, the broadcast network may also offload data to cellular networks, i.e. the other way as described above. This may be used by the operator of the broadcast network e.g., to fulfill service level agreements, even if the broadcast network is not operating at full capacity for any reason.

The data transformer when transforming is configured to transform the requested time for transmission of the load data to an earlier transmission time.

Especially in combination with the above mentioned data storage, the load data may be received in the broadcast network prior to the requested time for transmission of the load data. Further, the provider of the load data may request a transmission time for which the required radio access network resources are not available. In this context, metadata that is provided with the load data, like the requested time for transmission, is seen as part of the load data and may also be transformed. Modifying the time for transmission of the load data may especially be used with program data that is to be transmitted e.g., with firmware update data that is to be provided to loT devices. For such data usually the time of transmission is not very relevant and may be changes without causing a degraded user experience, as would be the case with video or audio data.

In yet another embodiment, the load data transformer may comprise a control interface communicatively coupled to the data transformer. The data transformer may be configured to output information about the transformation of the load data and receive a confirmation for the transformation via the control interface.

The control interface may for example comprise an interface accessible via a data network, especially at least one of a web-based user-accessible interface, and an API-based machine-accessible interface, and a RESTful interface, and an XML-based or JSON-based interface, and a client-program-based interface.

The control interface serves to inform a provider of the load data about an intended transformation. The data transformer may therefore output this information to the provider of the load data, prior to transforming the load data. The provider of the load data may then confirm or reject the intended transformation.

The control interface may be provided as an interface that is easily accessible for human users. To this end, the control interface may for example be provided as a web-based user interface. Such a web-based user interface may be hosted on a server in the broadcast network and may deliver a respective interactive web page to a client program, like a web browser program.

Such an interactive web page may also allow a user to provide the request for offloading the respective load data. Such an interactive web page may also provide feedback to the user regarding his requests and the intended transformation. Regional settings or parameters may for example be shown on a map. Frequency-related settings may for example be shown in a respective diagram, and the like.

In addition or as alternative to the human accessible control interface, a machine-accessible or API-based control interface may be provided. Such a control interface may allow interaction via a respective data format, like XML, JSON, or the like. It is understood, that a single endpoint may be defined for the API-based control interface or that different end-points may be defined, like in a RESTful interface.

It is understood, that a respective client program may also be provided that allows interaction via the control interface. Such a client program may use the machine-accessible version of the control interface and process the data for presentation to the user.

The control interface may also provide a feedback about the availability of the radio access network resources that are requested as response to receiving initial request for transmission of the load data. If the requested radio access network resources are available, the control interface may report accordingly.

In other examples, the control interface may indicate that the requested radio access network resources are not available. In addition, the control interface may provide an alternative set or ranges of radio access network resources that may be used instead. It is understood, that the information about alternative radio access network resources may be requested by the control interface from the data transformer.

Alternative sets of radio access network resources may be identified by searching for sets of radio resources that only deviate from the request in one, two or three of the radio access network resources. The suggested set of radio access network resources may for example differ from the requested radio access network resources in the geographical region for emission of the load data, in the frequency range or bandwidth used for emitting the load data, in the time or time period used for emitting the load data. It is understood, that with the suggested set of radio access network resources another quota relation or price may also be provided. If for example, with the originally requested radio access network resources, the quota relation would have been 1:0.5, the suggested set of radio access network resources may comprise a data-wise more expensive quota relation, like 1:1 or a data-wise less expensive quota relation, like 1:0.25.

Further, the present disclosure is also meant to expressly disclose a broadcast network comprising the load data transformer. Such a broadcast network may comprise at least one radio access network, a core network as load data source network, and a load data transformer.

### BRIEF DESCRIPTION OF THE DRAWINGS

For a more complete understanding of the present disclosure and advantages thereof, reference is now made to the following description taken in conjunction with the accompanying drawings. The disclosure is explained in more detail below using exemplary embodiments which are specified in the schematic figures of the drawings, in which:
Figure 1 shows a schematic diagram of an embodiment of a load data transformer according to the present disclosure, a load data source network and a load data receiving network;
Figure 2 shows a schematic diagram of a load data transformer according to the present disclosure, a load data source network and a load data receiving network;
Figure 3 shows a schematic diagram of a load data transformer according to the present disclosure, a load data source network and a load data receiving network; and
Figure 4 shows a flow diagram of an embodiment of a method according to the present disclosure.

In the figures like reference signs denote like elements unless stated otherwise.

### DETAILED DESCRIPTION OF THE DRAWINGS

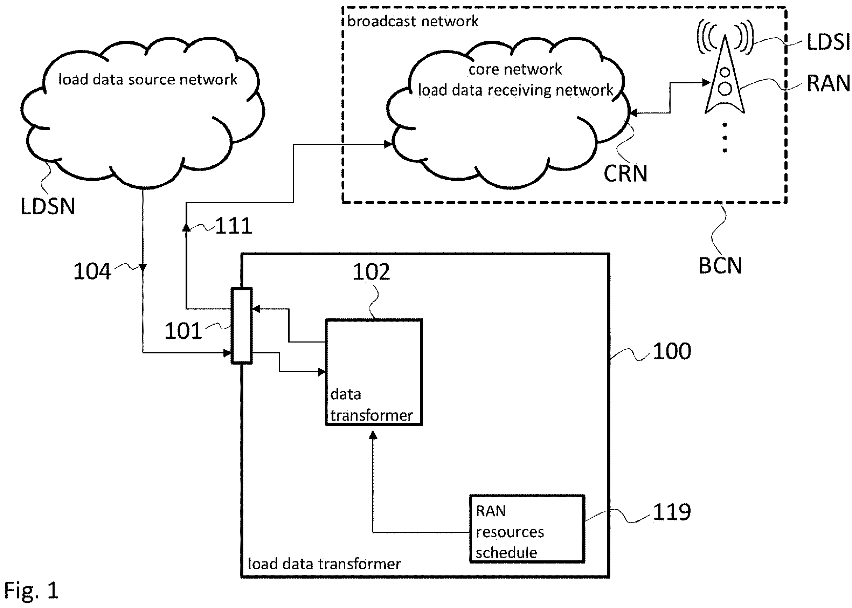

Figure 1 shows a schematic diagram of a load data transformer 100 together with a load data source network LDSN and a broadcast network BCN.

The load data source network LDSN may be the network of a load data provider, like for example a streaming media service. It is understood, that the load data source network LDSN may comprise data storages, network devices and any other element required to provide the respective services offered by the load data source network LDSN.

The broadcast network BCN comprises a core network CRN, which in this case also is the load data receiving network CRN, that is communicatively coupled to a plurality of radio access networks RAN that emit wireless load data signals LDSI. For sake of clarity, only one radio access network RAN is shown, and more radio access networks RAN are hinted at by three dots. It is understood, that the broadcast network BCN may comprise any number of radio access networks RAN distributed over the area of operation of the operator of the broadcast network BCN. The core network CRN provides data to be transmitted to the radio access networks RAN for transmission to receiving devices in the load data signals LDSI.

In embodiments, the load data source network LDSN may also be implemented as the core network CRN. Further, it is understood, that the above-presented explanations regarding load data source networks and broadcast networks may be applied to the load data source network LDSN and the broadcast network BCN.

In addition, in other embodiments, the network manager 100 may be provided as component of the load data source network LDSN or as component of the broadcast network BCN, especially of the core network CRN.

The network manager 100 comprises a data interface 101 that is internally communicatively coupled to a data transformer 102. Externally, the data interface 101 is communicatively coupled to the load data source network LDSN and to the core network CRN of the broadcast network BCN.

The network manager 100 further comprises a radio access network resources schedule 119 that is communicatively coupled to the data transformer 102. The radio access network resources schedule 119 comprises information about reservations of radio access network resources for at least one radio access network RAN of the broadcast network BCN and serves the data transformer 102 for deciding on how to transform load data 104. The radio access network resources schedule 119 may for example comprise a geographical location for transmission of the load data 104, a frequency range or bandwidth for transmission of the load data 104, a transmission time or time slot for transmission of the load data 104, and a modulation scheme for modulating the load data signal LDSI.

The load data source network LDSN provides the load data 104 to the network manager 100. The data transformer 102 receives the load data 104 and transforms the load data 104 into transformed load data 111 based on a radio access network resources schedule 119 of a broadcast network BCN.

After transforming the load data 104 into transformed load data 111, the data transformer 102 outputs the transformed load data 111 via the data interface 101 to the load data receiving network CRN.

The data transformer 102 transforms the load data 104 by at least one of reducing the quality of video or audio data comprised in the load data 104, increasing the quality of video or audio data comprised in the load data 104, removing data from the load data 104, adding data to the load data 104, changing data in the load data 104, changing a bit rate of the load data 104 if the load data 104 comprises video and/or audio data, and changing a transmission length of the load data 104. The data transformer 102 when transforming may also transform the requested time for transmission of the load data 104 to an earlier transmission time.

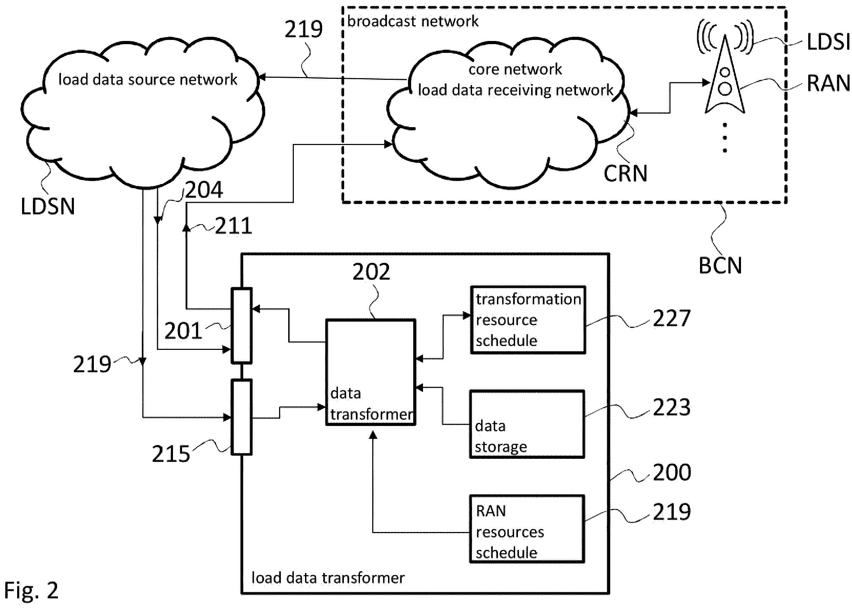

Figure 2 shows another a load data transformer 200 with a load data source network LDSN and a broadcast network BCN. The above explanations regarding the load data source network LDSN and the broadcast network BCN apply mutatis mutandis.

The load data transformer 200 is based on the load data transformer 100, and therefore comprises a data interface 201 that is internally communicatively coupled to a data transformer 202. Externally, the data interface 201 is communicatively coupled to the broadcast network BCN. The above-presented explanations regarding the load data transformer 100 and its elements also apply to the load data transformer 200 mutatis mutandis.

The load data transformer 200 further comprises a control interface 215 that is internally communicatively coupled to the data transformer 202, and that is externally accessible via any data network, for example the internet. The control interface 215 is communicatively coupled to the load data source network LDSN. The control interface 215 may for example serve for transmitting additional data to the load data transformer 200. For example, the radio access network resources schedule 219 may instead of or in addition to being stored in the load data transformer 200, also be provided from the load data source network LDSN to the load data transformer 200. It is understood, that the radio access network resources schedule 219 may also be provided from the core network CRN directly.

The control interface 215 may for example comprise a web-based user-accessible interface, an API-based machine-accessible interface, a RESTful interface, an XML-based or JSON-based interface, and a client-program-based interface. It is understood, that the control interface 215 may also be provided as element of the data interface 201.

The load data transformer 200 further comprises a transformation resource schedule 227 that comprises information about available transformation resources in the data transformer 102. The data transformer 102 may then timely schedule the transformation of the load data 104 based on the transformation resource schedule 227.

Further, the load data transformer 200 may comprise a data storage 223. The data transformer 202 may for example store the load data 204 and/or the transformed load data 211 in the data storage 223 until it is needed.

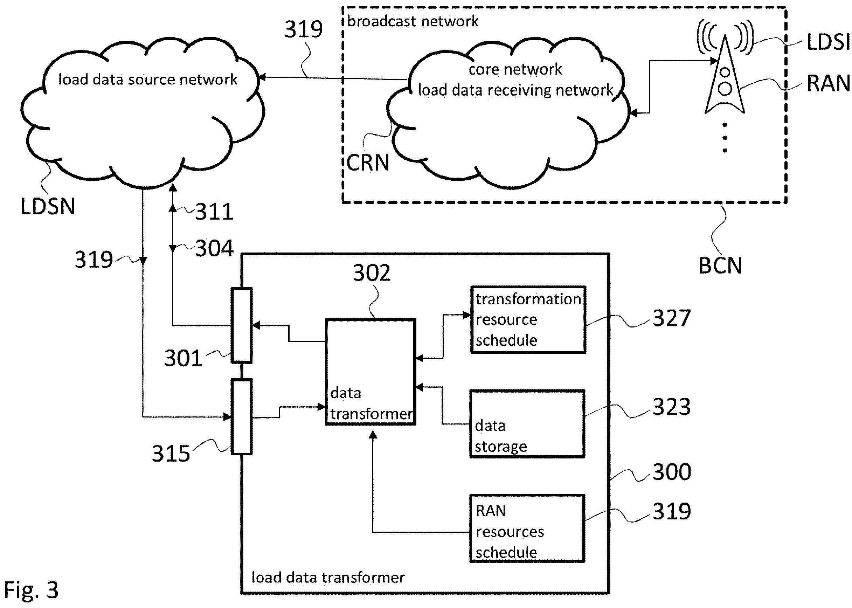

Figure 3 shows another load data transformer 300. The load data transformer 300 is based on the load data transformer 200, and therefore comprises a data interface 301 that is internally communicatively coupled to a data transformer 302. Externally, the data interface 301 is communicatively coupled to the load data source network LDSN. The above-presented explanations regarding the load data transformer 200 and its elements also apply to the load data transformer 300 and its elements mutatis mutandis.

The load data transformer 300 also comprises a control interface 315 that is internally communicatively coupled to the data transformer 302, and that is externally accessible via any data network, for example the internet. It is understood, that the control interface 315 may also be provided as element of the data interface 301.

The load data transformer 300 also comprises the radio access network resources schedule 319, the transformation resource schedule 227 and the data storage 323.

In contrast to the arrangement of figure 2, in figure 3 the load data transformer 300 receives the load data 304 and provides the transformed load data 311 to load data source network LDSN. It is understood, that the load data transformer 300 may also provide the transformed load data 311 for example to the radio access networks RAN directly.

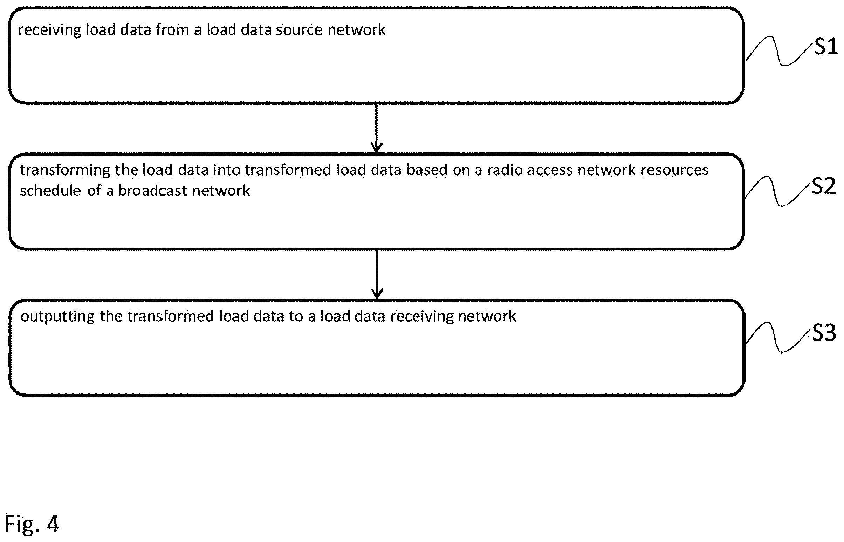

For sake of clarity in the following description of the method-based Fig. 4 the reference signs used above in the description of apparatus based Figs. 1 - 3 will be maintained.

Figure 4 shows a flow diagram of a method for managing load data 104, 204, 304. The method comprises receiving S1 load data 104, 204, 304 from a load data source network LDSN, transforming S2 the load data 104, 204, 304 into transformed load data 111, 211, 311 based on a radio access network resources schedule 119, 219, 319 of a broadcast network BCN, and outputting S3 the transformed load data 111, 211, 311 to a load data receiving network CRN.

The radio access network resources schedule 119, 219, 319 comprises information about reservations of radio access network resources for at least one radio access network RAN of the broadcast network BCN.

Although specific embodiments have been illustrated and described herein, it will be appreciated by those of ordinary skill in the art that a variety of alternate implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims.

### LIST OF REFERENCE SIGNS

- 100, 200, 300: load data transformer
- 101, 201, 301: data interface
- 102, 202, 302: data transformer
- 104, 204, 304: load data
- 111, 211, 311: transformed load data

- 215, 315: control interface
- 119, 219, 319: radio access network resources schedule
- 223, 323: data storage
- 227, 327: transformation resource schedule

- RAN: radio access network
- LDSI: load data signal
- BCN: broadcast network
- CRN: core network / load data receiving network
- LDSN: load data source network

- S1, S2, S3: method step

## Claims

1. Load data transformer (100, 200, 300) comprising:
a data interface (101, 201, 301) configured to communicatively couple to at least one load data source network (LDSN) and at least one load data receiving network (CRN);
a data transformer (102, 202, 302) communicatively coupled to the data interface (101, 201, 301), and configured to receive load data (104, 204, 304) via the data interface (101, 201, 301) from the load data source network (LDSN), and transform the load data (104, 204, 304) into transformed load data (111, 211, 311) based on a radio access network resources schedule (119, 219, 319) of a broadcast network (BCN), and to output the transformed load data (111, 211, 311) via the data interface (101, 201, 301) to the load data receiving network (CRN);
wherein radio access network resources schedule (119, 219, 319) comprises information about reservations of radio access network resources for at least one radio access network (RAN) of the broadcast network (BCN);
wherein the data transformer (102, 202, 302) when transforming is configured to transform the requested time for transmission of the load data (104, 204, 304) to an earlier transmission time.

2. Load data transformer (100, 200, 300) according to claim 1, wherein the at least one radio access network resource comprises at least one of:
a geographical location for transmission of the load data(104, 204, 304),
a frequency range or bandwidth for transmission of the load data (104, 204, 304),
a transmission time or time slot for transmission of the load data (104, 204, 304), and
a modulation scheme for modulating the load data signal (LDSI).

3. Load data transformer (100, 200, 300) according to any one of the preceding claims, wherein the data transformer (102, 202, 302) is configured to transform the load data (104, 204, 304) by at least one of:
reducing the quality of video or audio data comprised in the load data (104, 204, 304),
increasing the quality of video or audio data comprised in the load data (104, 204, 304),
removing data from the load data (104, 204, 304),
adding data to the load data (104, 204, 304),
changing data in the load data (104, 204, 304),
changing a bit rate of the load data (104, 204, 304) if the load data (104, 204, 304) comprises video and/or audio data, and
changing a transmission length of the load data (104, 204, 304).

4. Load data transformer (100, 200, 300) according to any one of the preceding claims, comprising a transformation resource schedule (227, 327) comprising information about available transformation resources in the data transformer (102, 202, 302);
wherein the data transformer (102, 202, 302) is configured to timely schedule the transformation of the load data (104, 204, 304) based on the transformation resource schedule (227, 327).

5. Load data transformer (100, 200, 300) according to any one of the preceding claims, comprising a data storage (223, 323),
wherein the data transformer (102, 202, 302) is communicatively coupled to the data storage (223, 323) and configured to receive the load data (104, 204, 304) and store at least one of the load data (104, 204, 304) and the transformed load data (111, 211, 311) in the data storage (223, 323).

6. Load data transformer (100, 200, 300) according to any one of the preceding claims, comprising a control interface (215, 315) communicatively coupled to the data transformer (102, 202, 302);
wherein the data transformer (102, 202, 302) is configured to output information about the transformation of the load data (104, 204, 304) and receive a confirmation for the transformation via the control interface (215, 315);
wherein the control interface (215, 315) comprises an interface accessible via a data network, especially at least one of a web-based user-accessible interface, and an API-based machine-accessible interface, and a RESTful interface, and an XML-based or JSON-based interface, and a client-program-based interface.

7. Method for managing load data (104, 204, 304), the method comprising:
receiving (S1) load data (104, 204, 304) from a load data source network (LDSN);
transforming (S2) the load data (104, 204, 304) into transformed load data (111, 211, 311) based on a radio access network resources schedule (119, 219, 319) of a broadcast network (BCN); and
outputting (S3) the transformed load data (111, 211, 311) to a load data receiving network (CRN);
wherein the radio access network resources schedule (119, 219, 319) comprises information about reservations of radio access network resources for at least one radio access network (RAN) of the broadcast network (BCN);
wherein transforming comprises transforming the requested time for transmission of the load data (104, 204, 304) to an earlier transmission time.

8. Method according to claim 7, wherein the at least one radio access network resource comprises at least one of:
a geographical location for transmission of the load data (104, 204, 304),
a frequency range or bandwidth for transmission of the load data (104, 204, 304),
a transmission time or time slot for transmission of the load data (104, 204, 304), and
a modulation scheme for modulating the load data signal (LDSI).

9. Method according to any one of the preceding method-based claims, wherein transforming the load data (104, 204, 304) comprises at least one of:
reducing the quality of video or audio data comprised in the load data (104, 204, 304),
increasing the quality of video or audio data comprised in the load data (104, 204, 304),
removing data from the load data (104, 204, 304),
adding data to the load data (104, 204, 304),
changing data in the load data (104, 204, 304),
changing a bit rate of the load data (104, 204, 304) if the load data (104, 204, 304) comprises video and/or audio data, and
changing a transmission length of the load data (104, 204, 304).

10. Method according to any one of the preceding method-based claims, wherein the transformation of the load data (104, 204, 304) is timely scheduled based on a transformation resource schedule (227, 327) comprising information about available transformation resources in the data transformer (102, 202, 302).

11. Method according to any one of the preceding method-based claims, wherein at least one of the load data (104, 204, 304) and the transformed load data (111, 211, 311) is stored in a data storage (223, 323).

12. Method according to any one of the preceding method-based claims, comprising outputting information about the transformation of the load data (104, 204, 304) via a control interface (215, 315); and
receiving a response for the transformation via the control interface (215, 315);
wherein the load data (104, 204, 304) is only transformed if the response is positive; and
wherein the control interface (215, 315) comprises an interface accessible via a data network, especially at least one of a web-based user-accessible interface, and an API-based machine-accessible interface, and a RESTful interface, and an XML-based or JSON-based interface, and a client-program-based interface.

## Patentansprüche

1. Lastdatenumwandler (100, 200, 300), umfassend:
eine Datenschnittstelle (101, 201, 301), die konfiguriert ist, um kommunikativ mit mindestens einem Lastdatenquellennetzwerk (LDSN) und mindestens einem Lastdatenempfangsnetzwerk (CRN) gekoppelt zu werden;
einen Datenumwandler (102, 202, 302), der kommunikativ mit der Datenschnittstelle (101, 201, 301) gekoppelt ist und konfiguriert ist, um Lastdaten (104, 204, 304) über die Datenschnittstelle (101, 201, 301) vom Lastdatenquellennetzwerk (LDSN) zu empfangen und die Lastdaten (104, 204, 304) basierend auf einem Funkzugangsnetzwerk-Ressourcenplan (119, 219, 319) eines Rundfunknetzwerks (BCN) in umgewandelte Lastdaten (111, 211, 311) umzuwandeln und die umgewandelten Lastdaten (111, 211, 311) über die Datenschnittstelle (101, 201, 301) an das Lastdatenempfangsnetzwerk (CRN) auszugeben;
wobei der Funkzugangsnetzwerk-Ressourcenplan (119, 219, 319) Informationen über Reservierungen von Funkzugangsnetzwerk-Ressourcen für mindestens ein Funkzugangsnetzwerk (RAN) des Rundfunknetzwerks (BCN) umfasst;
wobei der Datenumwandler (102, 202, 302) beim Umwandeln konfiguriert ist, um den angeforderten Zeitpunkt für das Übertragen der Lastdaten (104, 204, 304) in einen früheren Übertragungszeitpunkt umzuwandeln.

2. Lastdatenumwandler (100, 200, 300) nach Anspruch 1, wobei die mindestens eine Funkzugangsnetzwerk-Ressource mindestens eines umfasst von:
einem geografischen Standort für das Übertragen der Lastdaten (104, 204, 304),
einem Frequenzbereich oder einer Bandbreite für das Übertragen der Lastdaten (104, 204, 304),
einem Übertragungszeitpunkt oder -zeitschlitz für das Übertragen der Lastdaten (104, 204, 304) und
einem Modulationsschema für das Modulieren des Lastdatensignals (LDSI).

3. Lastdatenumwandler (100, 200, 300) nach einem der vorstehenden Ansprüche, wobei der Datenumwandler (102, 202, 302) konfiguriert ist, um die Lastdaten (104, 204, 304) durch mindestens eines umzuwandeln von:
Reduzieren der Qualität von in den Lastdaten (104, 204, 304) enthaltenen Video- oder Audiodaten,
Erhöhen der Qualität von in den Lastdaten (104, 204, 304) enthaltenen Video- oder Audiodaten,
Entfernen von Daten aus den Lastdaten (104, 204, 304),
Hinzufügen von Daten zu den Lastdaten (104, 204, 304),
Ändern von Daten in den Lastdaten (104, 204, 304),
Ändern einer Bitrate der Lastdaten (104, 204, 304), wenn die Lastdaten (104, 204, 304) Video- und/oder Audiodaten umfassen, und
Ändern einer Übertragungslänge der Lastdaten (104, 204, 304).

4. Lastdatenumwandler (100, 200, 300) nach einem der vorstehenden Ansprüche, umfassend einen Umwandlungsressourcenplan (227, 327), umfassend Informationen über verfügbare Umwandlungsressourcen in dem Datenumwandler (102, 202, 302);
wobei der Datenumwandler (102, 202, 302) konfiguriert ist, um das Umwandeln der Lastdaten (104, 204, 304) basierend auf dem Umwandlungsressourcenplan (227, 327) zeitlich zu planen.

5. Lastdatenumwandler (100, 200, 300) nach einem der vorstehenden Ansprüche, umfassend eine Datenspeicherung (223, 323),
wobei der Datenumwandler (102, 202, 302) kommunikativ mit der Datenspeicherung (223, 323) gekoppelt ist und konfiguriert ist, um die Lastdaten (104, 204, 304) zu empfangen und mindestens eines von den Lastdaten (104, 204, 304) und den umgewandelten Lastdaten (111, 211, 311) in der Datenspeicherung (223, 323) zu speichern.

6. Lastdatenumwandler (100, 200, 300) nach einem der vorstehenden Ansprüche, umfassend eine Steuerschnittstelle (215, 315), die kommunikativ mit dem Datenumwandler (102, 202, 302) gekoppelt ist;
wobei der Datenumwandler (102, 202, 302) konfiguriert ist, um Informationen über das Umwandeln der Lastdaten (104, 204, 304) auszugeben und über die Steuerschnittstelle (215, 315) eine Bestätigung für das Umwandeln zu empfangen;
wobei die Steuerschnittstelle (215, 315) eine über ein Datennetzwerk zugängliche Schnittstelle umfasst, insbesondere mindestens eine von einer webbasierten, benutzerzugänglichen Schnittstelle und einer API-basierten, maschinenzugänglichen Schnittstelle und einer RESTful-Schnittstelle und einer XML-basierten oder JSON-basierten Schnittstelle und einer Client-Programmbasierten Schnittstelle.

7. Verfahren zum Verwalten von Lastdaten (104, 204, 304), wobei das Verfahren umfasst:
Empfangen (S1) von Lastdaten (104, 204, 304) von einem Lastdatenquellennetzwerk (LDSN);
Umwandeln (S2) der Lastdaten (104, 204, 304) in umgewandelte Lastdaten (111, 211, 311) basierend auf einem Funkzugangsnetzwerk-Ressourcenplan (119, 219, 319) eines Rundfunknetzwerks (BCN) und
Ausgeben (S3) der umgewandelten Lastdaten (111, 211, 311) an ein Lastdatenempfangsnetzwerk (CRN);
wobei der Funkzugangsnetzwerk-Ressourcenplan (119, 219, 319) Informationen über Reservierungen von Funkzugangsnetzwerk-Ressourcen für mindestens ein Funkzugangsnetzwerk (RAN) des Rundfunknetzwerks (BCN) umfasst;
wobei das Umwandeln das Umwandeln des angeforderten Zeitpunkts für das Übertragen der Lastdaten (104, 204, 304) in einen früheren Übertragungszeitpunkt umfasst.

8. Verfahren nach Anspruch 7, wobei die mindestens eine Funkzugangsnetzwerk-Ressource mindestens eines umfasst von:
einem geografischen Standort für das Übertragen der Lastdaten (104, 204, 304),
einem Frequenzbereich oder einer Bandbreite für das Übertragen der Lastdaten (104, 204, 304),
einem Übertragungszeitpunkt oder -zeitschlitz für das Übertragen der Lastdaten (104, 204, 304) und
einem Modulationsschema für das Modulieren des Lastdatensignals (LDSI).

9. Verfahren nach einem der vorstehenden verfahrensbasierten Ansprüche, wobei das Umwandeln der Lastdaten (104, 204, 304) mindestens eines umfasst von:
Reduzieren der Qualität von in den Lastdaten (104, 204, 304) enthaltenen Video- oder Audiodaten,
Erhöhen der Qualität von in den Lastdaten (104, 204, 304) enthaltenen Video- oder Audiodaten,
Entfernen von Daten aus den Lastdaten (104, 204, 304),
Hinzufügen von Daten zu den Lastdaten (104, 204, 304),
Ändern von Daten in den Lastdaten (104, 204, 304),
Ändern einer Bitrate der Lastdaten (104, 204, 304), wenn die Lastdaten (104, 204, 304) Video- und/oder Audiodaten umfassen, und
Ändern einer Übertragungslänge der Lastdaten (104, 204, 304).

10. Verfahren nach einem der vorstehenden verfahrensbasierten Ansprüche, wobei das Umwandeln der Lastdaten (104, 204, 304) basierend auf einem Umwandlungsressourcenplan (227, 327), umfassend Informationen über verfügbare Umwandlungsressourcen in dem Datenumwandler (102, 202, 302), zeitlich geplant wird.

11. Verfahren nach einem der vorstehenden verfahrensbasierten Ansprüche, wobei mindestens eines von den Lastdaten (104, 204, 304) und den umgewandelten Lastdaten (111, 211, 311) in einer Datenspeicherung (223, 323) gespeichert wird.

12. Verfahren nach einem der vorstehenden verfahrensbasierten Ansprüche, umfassend das Ausgeben von Informationen über das Umwandeln der Lastdaten (104, 204, 304) über eine Steuerschnittstelle (215, 315); und
Empfangen einer Antwort für das Umwandeln über die Steuerschnittstelle (215, 315);
wobei die Lastdaten (104, 204, 304) nur umgewandelt werden, wenn die Antwort positiv ist; und
wobei die Steuerschnittstelle (215, 315) eine über ein Datennetzwerk zugängliche Schnittstelle umfasst, insbesondere mindestens eine von einer webbasierten, benutzerzugänglichen Schnittstelle und einer API-basierten, maschinenzugänglichen Schnittstelle und einer RESTful-Schnittstelle und einer XML-basierten oder JSON-basierten Schnittstelle und einer Client-Programmbasierten Schnittstelle.

## Revendications

1. Transformateur de données de charge (100, 200, 300) comprenant :
une interface de données (101, 201, 301) configurée pour se coupler par communications à au moins un réseau source de données de charge (LDSN) et à au moins un réseau de réception de données de charge (CRN) ;
un transformateur de données (102, 202, 302) couplé par communications à l'interface de données (101, 201, 301), et configuré pour recevoir des données de charge (104, 204, 304) par l'intermédiaire de l'interface de données (101, 201, 301) en provenance du réseau source de données de charge (LDSN), et transformer les données de charge (104, 204, 304) en données de charge transformées (111, 211, 311) en fonction d'une planification de ressources de réseau d'accès radio (119, 219, 319) d'un réseau de diffusion (BCN), et pour délivrer en sortie les données de charge transformées (111, 211, 311) par l'intermédiaire de l'interface de données (101, 201, 301) au réseau de réception de données de charge (CRN) ;
dans lequel la planification de ressources de réseau d'accès radio (119, 219, 319) comprend des informations concernant des réservations de ressources de réseau d'accès radio pour au moins un réseau d'accès radio (RAN) du réseau de diffusion (BCN) ;
dans lequel le transformateur de données (102, 202, 302) lors de la transformation est configuré pour transformer le moment demandé pour la transmission des données de charge (104, 204, 304) en un moment de transmission antérieur.

2. Transformateur de données de charge (100, 200, 300) selon la revendication 1, dans lequel l'au moins une ressource de réseau d'accès radio comprend au moins l'un parmi :
une localisation géographique pour la transmission des données de charge (104, 204, 304),
une plage de fréquence ou une largeur de bande pour la transmission des données de charge (104, 204, 304),
un moment ou créneau temporel de transmission pour la transmission des données de charge (104, 204, 304), et
un schéma de modulation permettant de moduler le signal de données de charge (LDSI).

3. Transformateur de données de charge (100, 200, 300) selon l'une quelconque des revendications précédentes, dans lequel le transformateur de données (102, 202, 302) est configuré pour transformer les données de charge (104, 204, 304) par au moins l'un parmi :
une réduction de la qualité de données vidéo ou audio comprises dans les données de charge (104, 204, 304),
une augmentation de la qualité de données vidéo ou audio comprises dans les données de charge (104, 204, 304),
un retrait de données des données de charge (104, 204, 304),
un ajout de données aux données de charge (104, 204, 304),
un changement de données dans les données de charge (104, 204, 304),
un changement de débit binaire des données de charge (104, 204, 304) si les données de charge (104, 204, 304) comprennent des données vidéo et/ou audio, et
un changement d'une longueur de transmission des données de charge (104, 204, 304).

4. Transformateur de données de charge (100, 200, 300) selon l'une quelconque des revendications précédentes, comprenant une planification de ressource de transformation (227, 327) comprenant des informations concernant des ressources de transformation disponibles dans le transformateur de données (102, 202, 302) ;
dans lequel le transformateur de données (102, 202, 302) est configuré pour planifier en temps voulu la transformation des données de charge (104, 204, 304) en fonction de la planification de ressource de transformation (227, 327).

5. Transformateur de données de charge (100, 200, 300) selon l'une quelconque des revendications précédentes, comprenant un stockage de données (223, 323),
dans lequel le transformateur de données (102, 202, 302) est couplé par communications avec le stockage de données (223, 323) et configuré pour recevoir les données de charge (104, 204, 304) et stocker au moins l'un parmi les données de charge (104, 204, 304) et les données de charge transformées (111, 211, 311) dans le stockage de données (223, 323).

6. Transformateur de données de charge (100, 200, 300) selon l'une quelconque des revendications précédentes, comprenant une interface de commande (215, 315) couplée par communications avec le transformateur de données (102, 202, 302) ;
dans lequel le transformateur de données (102, 202, 302) est configuré pour délivrer en sortie des informations concernant la transformation des données de charge (104, 204, 304) et recevoir une confirmation pour la transformation par l'intermédiaire de l'interface de commande (215, 315) ;
dans lequel l'interface de commande (215, 315) comprend une interface accessible par l'intermédiaire d'un réseau de données, spécialement au moins l'une parmi une interface accessible aux utilisateurs via le Web, une interface accessible par machine via une API, une interface RESTful, une interface basée sur XML ou sur JSON et une interface basée sur un programme client.

7. Procédé permettant de gérer des données de charge (104, 204, 304), le procédé comprenant :
la réception (S1) de données de charge (104, 204, 304) en provenance d'un réseau source de données de charge (LDSN) ;
la transformation (S2) des données de charge (104, 204, 304) en données de charge transformées (111, 211, 311) en fonction d'une planification de ressources de réseau d'accès radio (119, 219, 319) d'un réseau de diffusion (BCN) ; et
la sortie (S3) des données de charge transformées (111, 211, 311) vers un réseau de réception de données de charge (CRN) ;
dans lequel la planification de ressources de réseau d'accès radio (119, 219, 319) comprend des informations concernant des réservations de ressources de réseau d'accès radio pour au moins un réseau d'accès radio (RAN) du réseau de diffusion (BCN) ;
dans lequel la transformation comprend la transformation du moment demandé pour la transmission des données de charge (104, 204, 304) en un moment de transmission antérieur.

8. Procédé selon la revendication 7, dans lequel l'au moins une ressource de réseau d'accès radio comprend au moins l'un parmi :
une localisation géographique pour la transmission des données de charge (104, 204, 304),
une plage de fréquence ou une largeur de bande pour la transmission des données de charge (104, 204, 304),
un moment ou créneau temporel de transmission pour la transmission des données de charge (104, 204, 304), et
un schéma de modulation permettant de moduler le signal de données de charge (LDSI).

9. Procédé selon l'une quelconque des revendications précédentes basées sur un procédé, dans lequel la transformation des données de charge (104, 204, 304) comprend au moins l'un parmi :
une réduction de la qualité de données vidéo ou audio comprises dans les données de charge (104, 204, 304),
une augmentation de la qualité de données vidéo ou audio comprises dans les données de charge (104, 204, 304),
un retrait de données des données de charge (104, 204, 304),
un ajout de données aux données de charge (104, 204, 304),
un changement de données dans les données de charge (104, 204, 304),
un changement de débit binaire des données de charge (104, 204, 304) si les données de charge (104, 204, 304) comprennent des données vidéo et/ou audio, et
un changement d'une longueur de transmission des données de charge (104, 204, 304).

10. Procédé selon l'une quelconque des revendications précédentes basées sur un procédé, dans lequel la transformation des données de charge (104, 204, 304) est planifiée en temps voulu en fonction d'une planification de ressource de transformation (227, 327) comprenant des informations concernant des ressources de transformation disponibles dans le transformateur de données (102, 202, 302).

11. Procédé selon l'une quelconque des revendications précédentes basées sur un procédé, dans lequel au moins l'un parmi les données de charge (104, 204, 304) et les données de charge transformées (111, 211, 311) est stocké dans un stockage de données (223, 323).

12. Procédé selon l'une quelconque des revendications précédentes basées sur un procédé, comprenant la sortie d'informations concernant la transformation des données de charge (104, 204, 304) par l'intermédiaire d'une interface de commande (215, 315) ; et
la réception d'une réponse pour la transformation par l'intermédiaire de l'interface de commande (215, 315) ;
dans lequel les données de charge (104, 204, 304) ne sont transformées que si la réponse est positive ; et
dans lequel l'interface de commande (215, 315) comprend une interface accessible par l'intermédiaire d'un réseau de données, spécialement au moins l'une parmi une interface accessible aux utilisateurs via le Web, une interface accessible par machine via une API, une interface RESTful, une interface basée sur XML ou sur JSON et une interface basée sur un programme client.
